# EUROPEAN PATENT APPLICATION

(11) **EP 4 434 459 A1**
(43) Date of publication of application: **25.09.2024**
(21) Application number: 22896204.9
(22) Date of filing: 20.10.2022
(51) Int. Cl.: A61B 5/16, G09B 9/00, G09B 19/00, A63H 33/08

(54) **MODULAR TRAINING APPARATUS**

(30) Priority: 17.11.2021 RU 2021133409
(71) Applicant: Levin, Fyodor Arkadievich, Moscow, 119234 (RU)
(72) Inventor: Levin, Fyodor Arkadievich, Moscow, 119234 (RU)
(74) Representative: Jeck, Jonathan
(86) International application number: PCT/RU2022/000318
(87) International publication number: WO 2023/091048

(57) **Abstract**

The invention refers to the educative and developing trainers. Operation concept of the trainer is based on modules, that is, spatial compositions are formed of cubic modules with certain dimensional characteristics and a proportional ratio of sides of a boy, a girl, a cactus and a dog. A module is made in such a way that consists of projections and recesses. The projections of one module are inserted into the recesses of another module, and the projections of the same module are placed in the recesses of another module. At this, various projections of another module can be inserted into different recesses of one module, and various projections of one module can be inserted into the recesses of another module. Modules in the same composition can be positioned both horizontally and vertically, can be positioned relative to each other not only in the correct position, but also in an inverted position, as well as in lateral plane. Proportions of the figures-modules must be such ones that when their different parts are combined, they fit tightly together, regardless of which parts of the figure-module must be connected. Various elements of the modules can be combined in any options and sequences during creation of a spatial composition. All types of module shapes can be used both independently and jointly. The model line of such figures can be expanded subject to the requirements for proportions being met.

## Description

The invention refers to the educative and developing trainers.

There is a large amount of specific developing modular construction kits for children starting from construction kits simulating the house building process up to balancers. Nevertheless, these construction kits are not intended for creation of unique 3-dimensional spatial compositions.

The task for a user is either to repeat a given scheme, for example, to build a house, or as in the case of numerous options of balancers, the possibilities to create original spatial compositions that are limited by one plane. The number of compositions that can be created from their elements is not too big and the construction features do not provide an expansion of a compatible model line.

Construction kits of such type are not intended to use by adults and due to this, they cannot refer to educative and developing trainers capable to accompany a person during all his life and to a support in harmonious development of the individual and have good influence with psychophysical well-being.

The modular trainer claimed in the present invention has no age restrictions, is three-dimensional, the options of spatial compositions construction created at its utilization and possibilities for expansion of the compatible model line of modules are not limited.

The invention represents a modular trainer consisting of a set of volume elements schematically depicting figures of people, plants and animals with certain dimensional characteristics. This allows by means of various jointing options to build an unlimited number of spatial compositions, both volumetrical and planar.

Memory, attention and imagination represent the main objects of educative and developing trainings.

The trainer exercises abstract reasoning, fantasy, spatial intelligence, fine motor skills, equilibrioception and sense of composition.

Not having age restrictions, the claimed trainer has therapeutic influence and can be effectively used for stress relieve. Developing fine motor skills and abstract reasoning the trainer represents an effective preventative measure against stroke, Alzheimer's disease, dementia and neurological diseases. The trainer can be used during rehabilitation after suffering from the above diseases, as well as oncological ones.

In addition to memory, attention and imagination the trainer develops in children abstract reasoning and spatial intelligence, imagination, fine motor skills, equilibrioception and sense of composition.

When used collectively by both children and adults, the trainer develops communication skills in teamwork.

The trainer can be made of any material, for example, wood, metal and plastic. The modules can be both as monochromic and different colors painted. At usage of a trainer with colored modules the options for ways in which the main task can be achieved, i.e. creation of a unique, comprehensive artistic and spatial image as a new artistic entity becomes more difficult. However, at the same time, the possibilities for creating of unique artistic objects are expanded significantly.

Operation concept of the trainer is based on modules, that is, spatial compositions are formed of cubic modules with certain dimensional characteristics and a proportional ratio of sides. When creating a spatial composition the different elements of the modules can be combined in any options and sequences and being fixed in a given position by force of gravity and friction force. The modular elements of this trainer schematically depict people, plants and animals.

Particularly, in the claimed invention, these elements can be represented by figures of a boy or a girl, a cactus or a dog. Moreover, all types of module shapes can be used simultaneously, provided certain proportions are observed. The model line of such figures can be expanded subject to the requirements for proportions being met.

The figures-modules can be located both vertically and horizontally at once. In addition to this, the figures-modules can be located relative to each other not only in the correct position, but also in an inverted position and in a lateral plane.

Proportions of the figures-modules must be such ones that when their different parts are combined they fit tightly together, regardless of which parts of the figure-module must be connected.

Particularly, at vertical construction, the lower row of the figures-modules can be located in the correct position and the upper row can be in an inverted position or also in the correct position. Horizontal location of modules can be made at the same time. In addition, it is possible to place the figures-modules spatially by combining them with the lateral sides of the main row.

Construction is made from the main horizontal row by means of building upward, to the right, to the left, in front and behind of number of the figures-modules in different positions that is provided by the corresponding proportions of the figures-modules parts. The proportions must be such ones that the various parts of the figures-modules fit tightly together and the composition formed by them is securely connected.

As embodiment of invention of the modules' figures that make up the trainer in this application the figures of a boy, a girl, a cactus and a dog are presented.

### Embodiment of invention 1

The module represents the figure of a boy. It is made volumetrical and consists of a head, neck, arms, shoulders, corpus, hips and legs. All elements are rectangular in shape and of the same thickness. At this, the dimensions of the elements have a strictly defined ratio. If the upper plane of the arms and hips and the lower plane of the legs ("a") are made in the form of a square, the side of which is equal to 1, then the height of the arms and the distance between the extreme points of the legs, the length of the corpus ("e") is 3a, the width of the shoulders "i" is 1.25a, the distance between the extreme points of the arms and the length of the legs "d" is 5a and the distance from the elbows to the corpus "f" is 2a. When the value of "a" changes the other values change proportionally, respectively. This ratio of dimensions ensures tight connection of the modules.

The module is made in such a way that it consists of projections and recesses. The projections of another module are inserted into the recesses of one module, and the projections of the same module are placed in the recesses of another module. Protruding elements and recesses having identical overall characteristics should alternate, which creates the possibility of jointing of modules with each other.

At this, the various projections of one module can be inserted into various recesses of another module, as well as into the various recesses of one module can be inserted various projections of another module. In this case, the modules in one composition can be located both in horizontal and in vertical plane.

In the module of a boy the function of projections plays head, arms and legs. The function of the recesses represents the recesses between the head and arms, the recesses on both sides of the corpus and the recess between the legs.

### Embodiment of invention 2

The module represents the figure of a girl. It is made volumetrical and consists of a head, neck, arms, shoulders, corpus, skirt and legs. The elements of a head, neck, arms, shoulders, corpus and legs are rectangular and the skirt sides are made at an angle to the corpus. The elements are of the same thickness. At this, the dimensions of the elements have a strictly defined ratio. If the upper plane of the arms is made as square, the side of which is equal to "a" and is 1, then the height of the arms, the distance between the outer and lateral points of the legs, the distance from the waist to the lower side point of the skirt ("e") is 3a, the shoulders width "i" is 1.25a, the distance between the outer extreme points of the arms "d" is 5a, the distance from the elbows to the corpus "f" is 2a. The length of the legs "g" is 4a. When the value of "a" changes the other values change proportionally, respectively. This ratio of dimensions ensures tight connection of the modules.

The module is made in such a way that it consists of projections and recesses. The projections of another module are inserted into the recesses of one module, and the projections of the same module are placed in the recesses of another module. Protruding elements and recesses having identical overall characteristics should alternate, which creates the possibility of jointing of modules with each other.

At this, the various projections of one module can be inserted into various recesses of another module, as well as into the various recesses of one module can be inserted various projections of another module. In this case, the modules in one composition can be located both in horizontal and in vertical plane.

In the module of a girl the function of projections plays head, arms, skirt and legs. The function of the recesses represents the recesses between the head and arms, the recesses on both sides of the corpus, as well as the recess between the legs and the lower plane of the skirt.

### Embodiment of invention 3

The module represents the figure of a cactus. It is volumetrical and consists of a trunk, a right lateral branch and a left lateral branch. One of the branches is located below the other one. All elements are rectangular in shape and of the same thickness. At this, the dimensions of the elements have a strictly defined ratio. If the upper plane of the trunk is made in the form of a square, the side of which is equal to "a" and is 1, then the distance from the upper point of the trunk to the inner base of the lower lateral branch ("h") is 6a. The distance from the upper point of the trunk to the inner base of the upper lateral branch ("d") is 5a and the distance from the lower base of the trunk to the lower base of the upper branch "g" is 4a. The distance from the lower base of the trunk to the lower base of the lower branch "e" is 3a. The height of the right and left branches ("g") is 4a, the outer base of the branches "f" is 2a. When the value of "a" changes the other values change proportionally, respectively. This ratio of dimensions ensures tight connection of the modules.

The module is made in such a way that it consists of projections and recesses. The projections of another module are inserted into the recesses of one module, and the projections of the same module are placed in the recesses of another module. Protruding elements and recesses having identical overall characteristics should alternate, which creates the possibility of jointing of modules with each other.

At this, the various projections of one module can be inserted into various recesses of another module, as well as into the various recesses of one module can be inserted various projections of another module. In this case, the modules in one composition can be located both in horizontal and in vertical plane.

In the module of a cactus, the function of projections plays the upper part of the trunk, the lower part of the trunk and branches. The function of the recesses play the recesses between the upper part of the trunk and the branches, between the lower part of the trunk and the branches.

### Embodiment of invention 4

The module represents the figure of a dog. It is volumetrical and consists of a head, nose, corpus, tail and paws. All elements are rectangular in shape and of the same thickness. At this, the dimensions of the elements have a strictly defined ratio. If the upper plane of the head is made in the square form, the side of which is equal to "a" and is 1, then the distance from the top of the head to the corpus, the length of the nose, the height of the tail, the height of the front leg, the height of the middle leg and the height of the back leg "f" is 2a, the distance from the tail to the base of the figure "e" is 3a, the length of the corpus "d" is 5a and the distance from the nose to the base of the figure "g" is 4a. When the value of "a" changes the other values change proportionally, respectively. This ratio of dimensions ensures tight connection of the modules.

The module is made in such a way that it consists of projections and recesses. The projections of another module are inserted into the recesses of one module, and the projections of the same module are placed in the recesses of another module. Protruding elements and recesses having identical overall characteristics should alternate, which creates the possibility of jointing of modules with each other.

At this, the various projections of one module can be inserted into various recesses of another module, as well as into the various recesses of one module can be inserted various projections of another module. In this case, the modules in one composition can be located both in horizontal and in vertical plane.

In the module of a dog, the function of projections plays a nose, head, tail and legs. The function of the recesses plays the recesses between the head and tail, between the head and nose, between the nose and the front leg, between the legs, between the tail and the back leg.

### Embodiment of invention 5

The modules represent the figure of a boy, a girl, a cactus and a dog. They are made as volumetrical. The elements of the figures have a rectangular shape and are of the same thickness. At the same time, the dimensions of the elements have a strictly defined ratio proportional to "a": 0.5 "a", 1 "a", 1.25 "a", 1.5 "a", 2 "a", 3 "a", 4 "a", 5 "a", 6 "a". Such sides' ratio ensures combination of different models of modules and their tight connection.

The modules are made in such a way that consist of projections and recesses. The projections of one module are inserted into the recesses of another module, and the projections of the same module are placed in the recesses of another module. At this, the various projections of one module can be inserted into various recesses of another module, as well as into the various recesses of one module can be inserted various projections of another module. In this case, the modules in one composition can be located both in horizontal and in vertical plane.

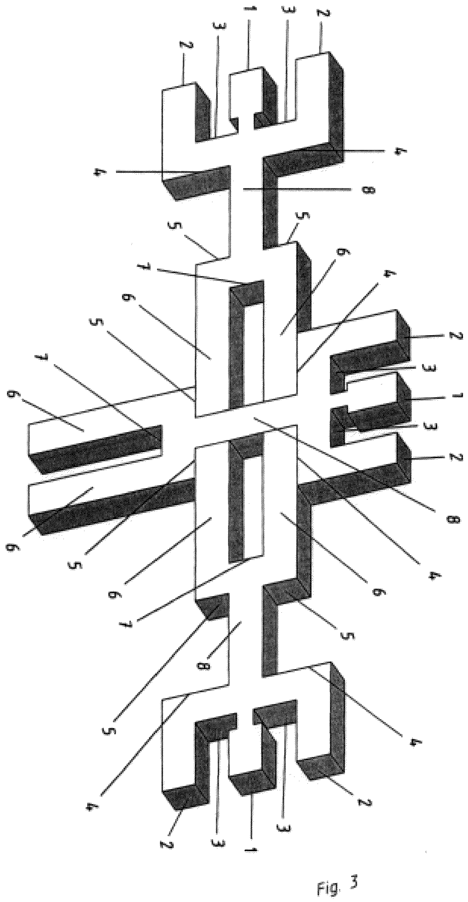

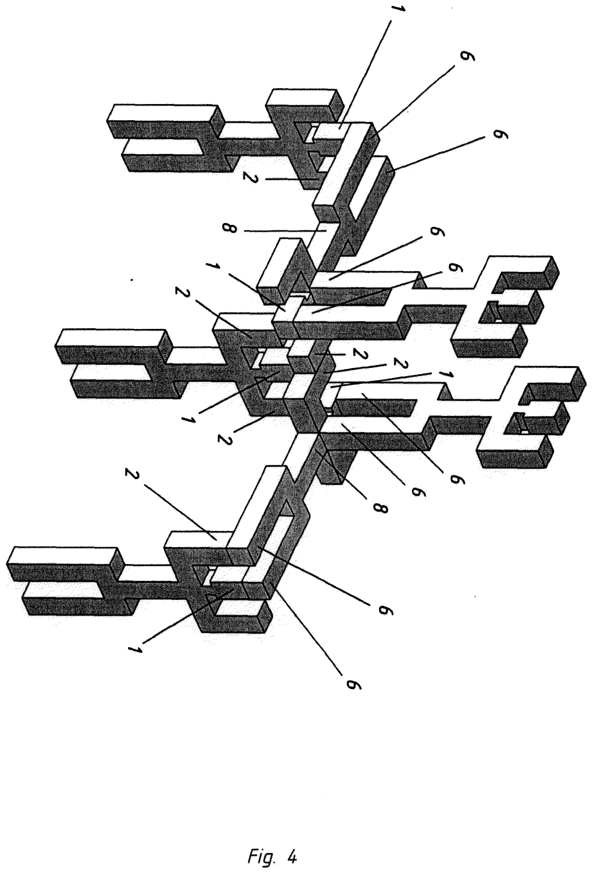

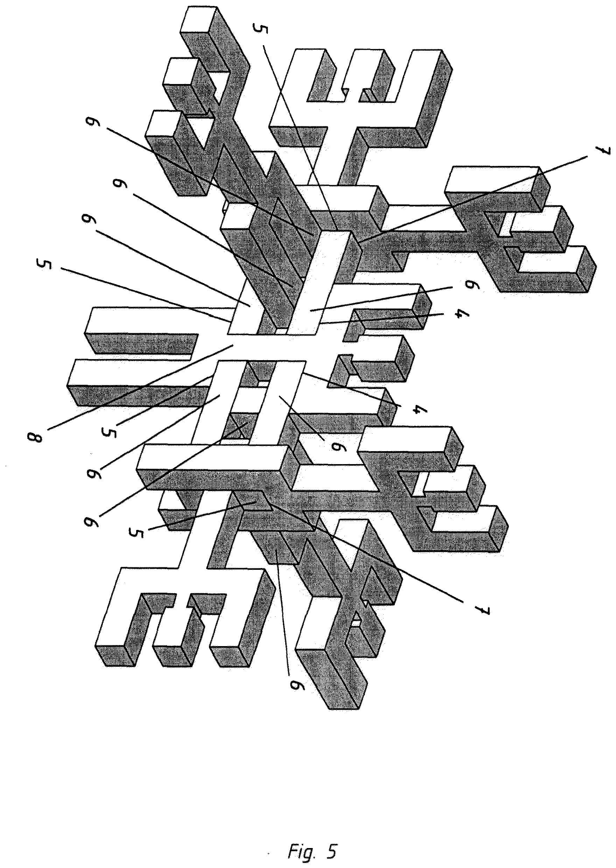

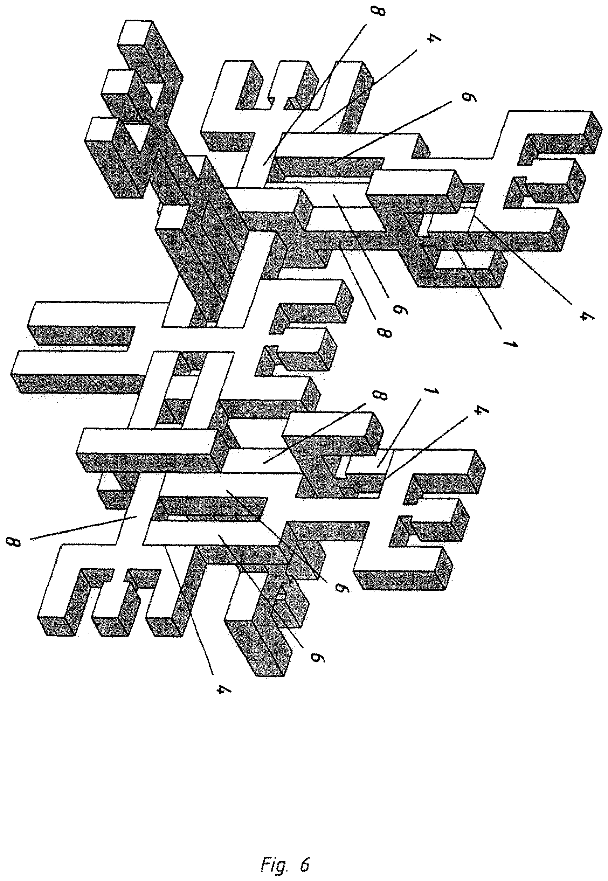

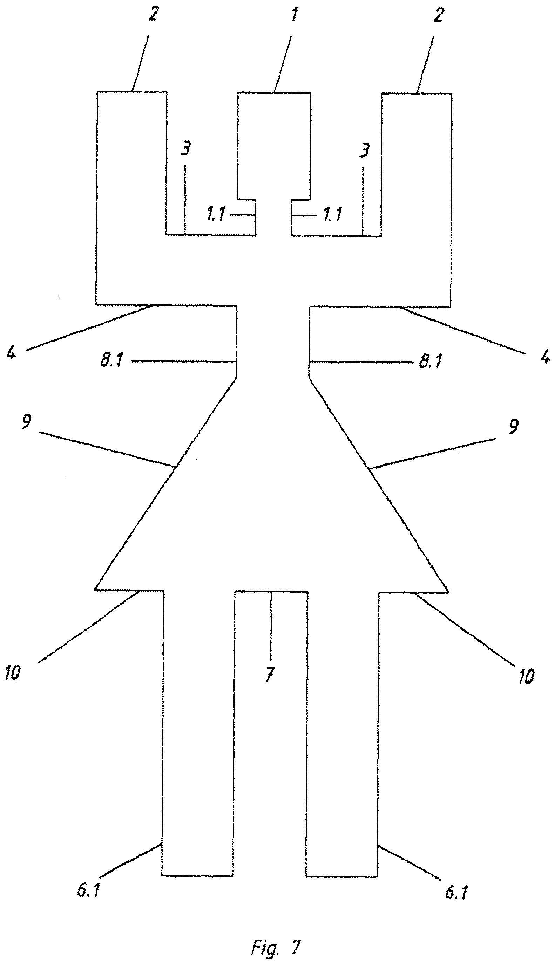

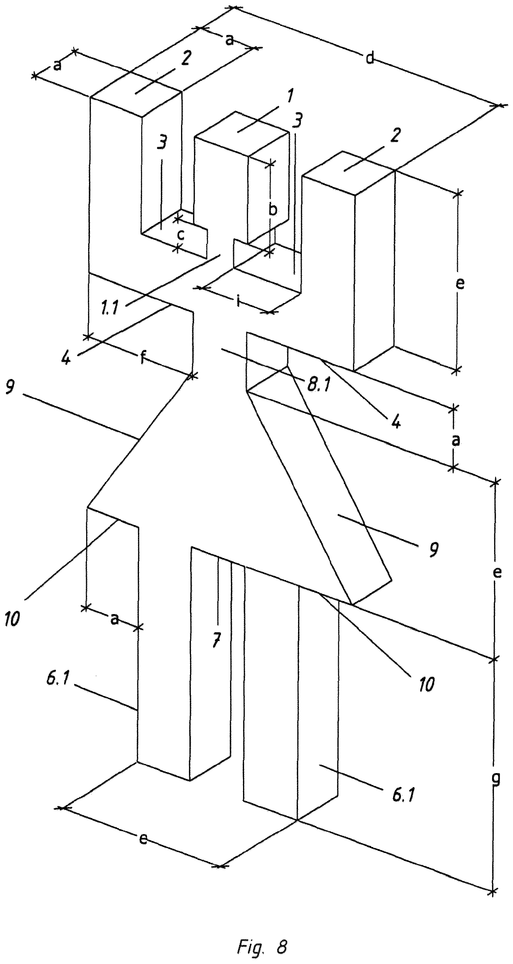

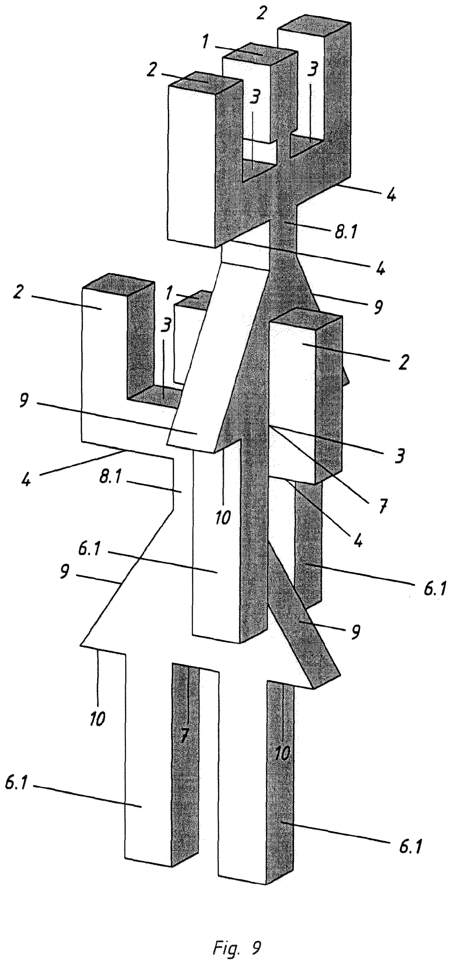

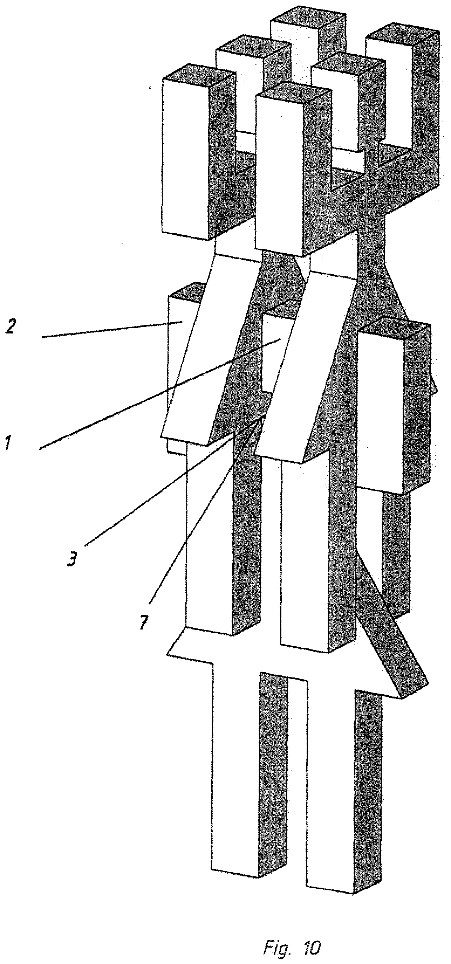

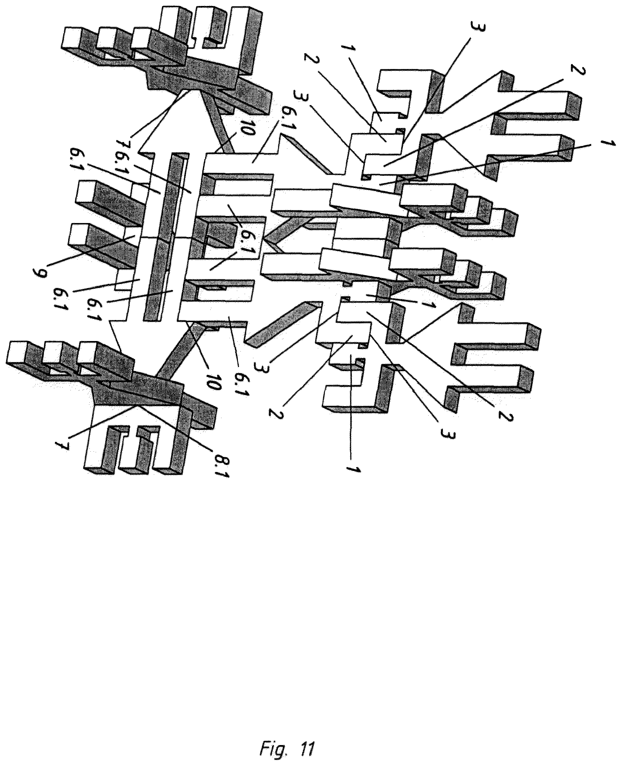

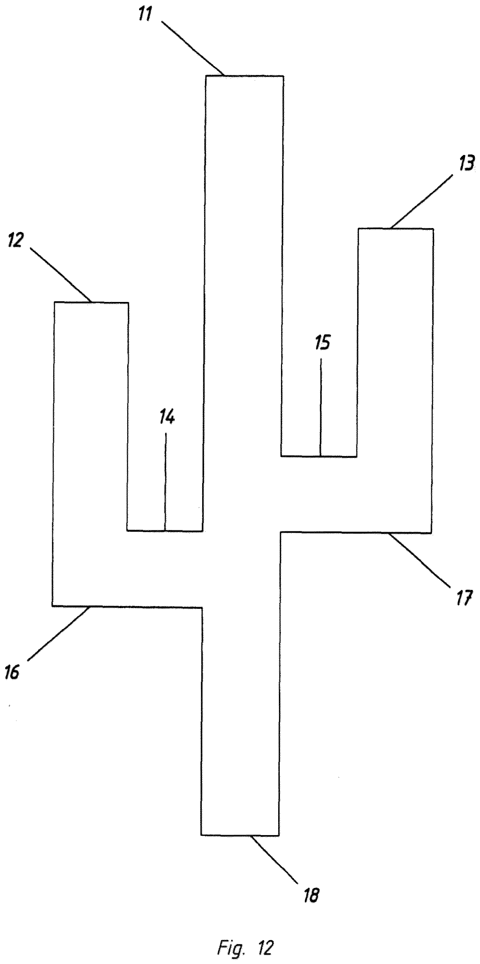

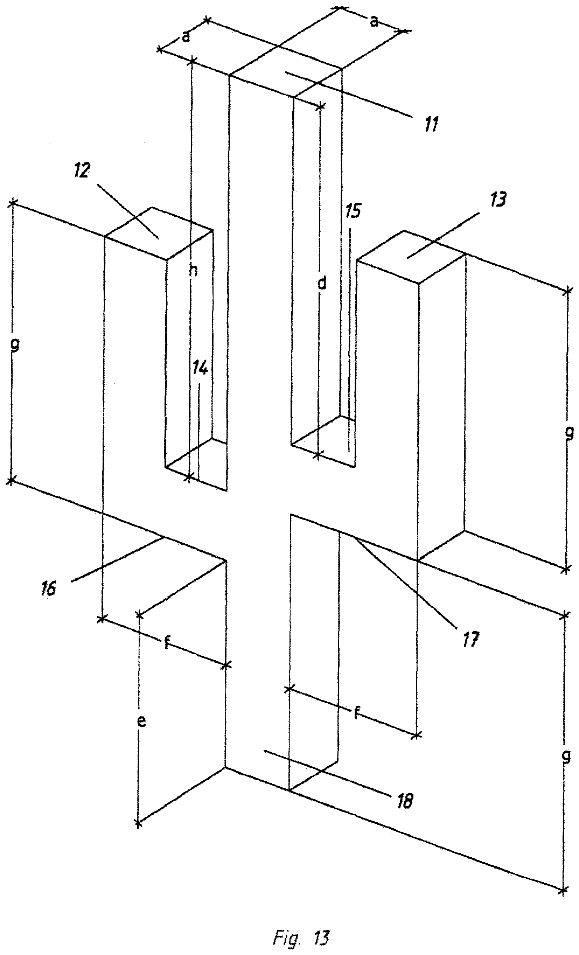

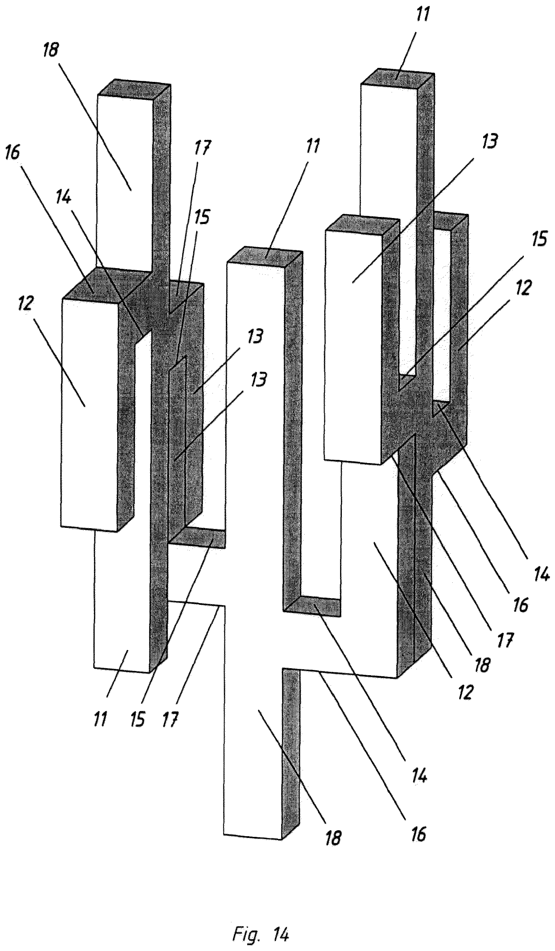

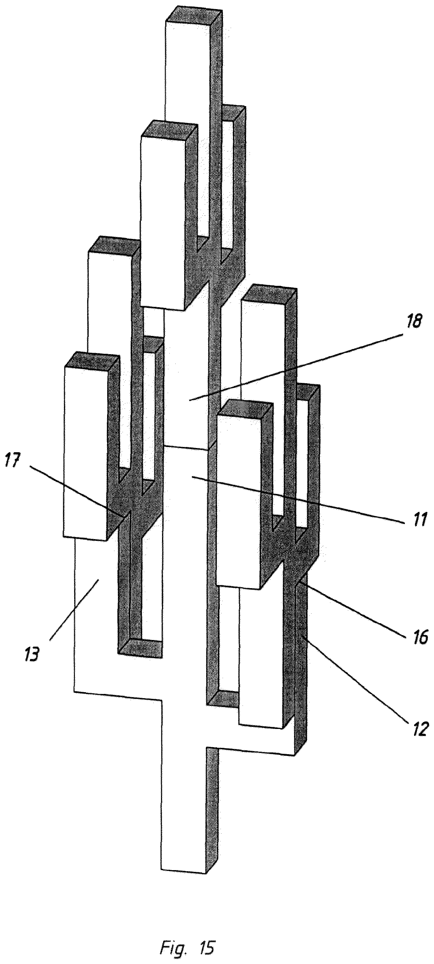

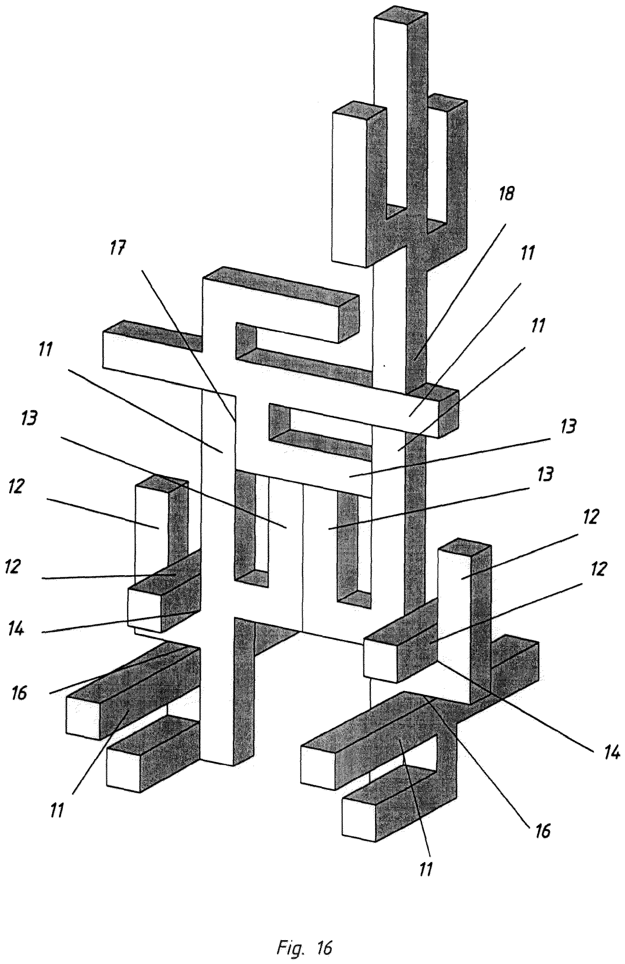

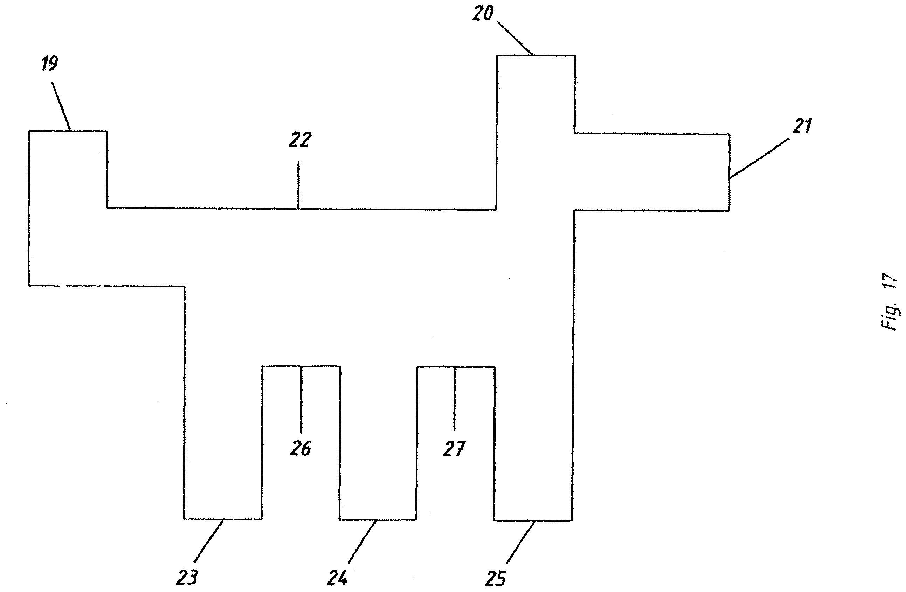

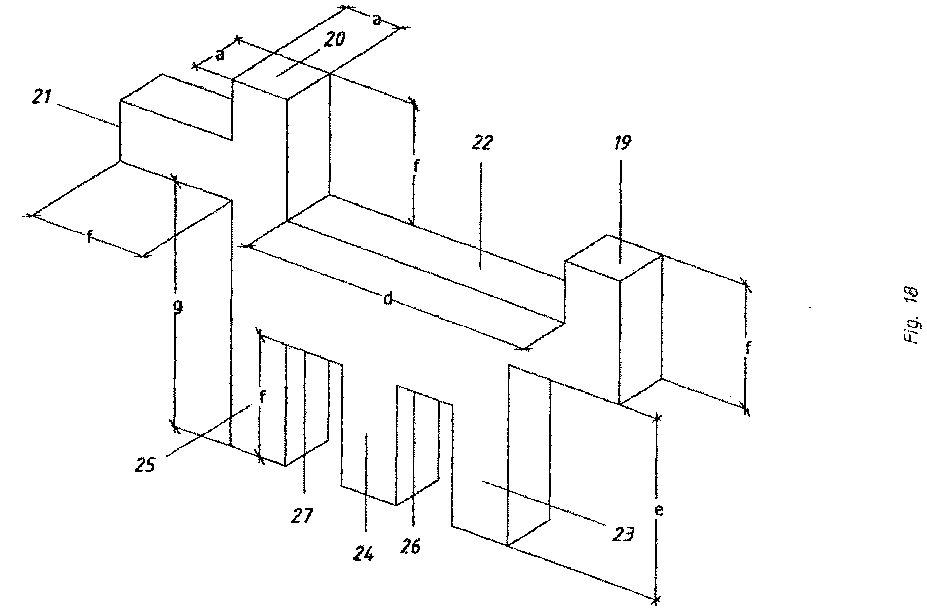

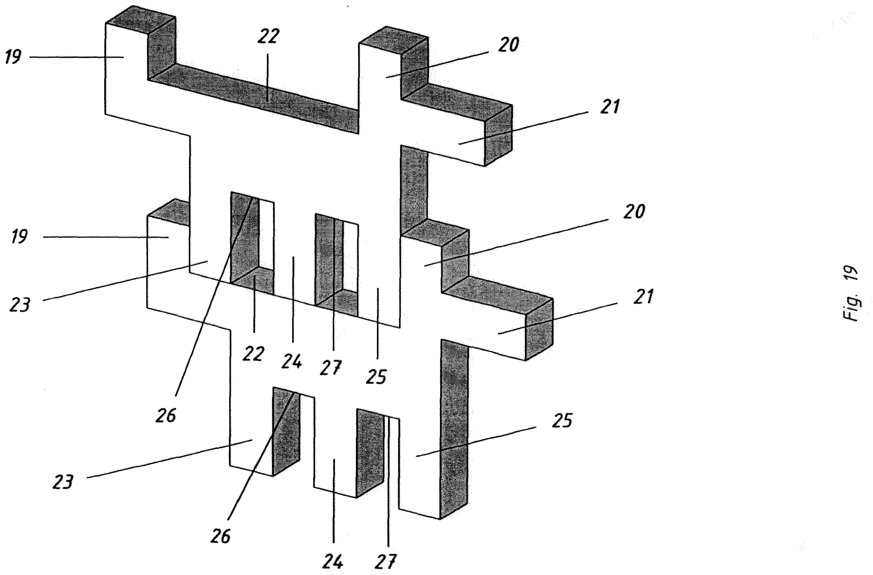

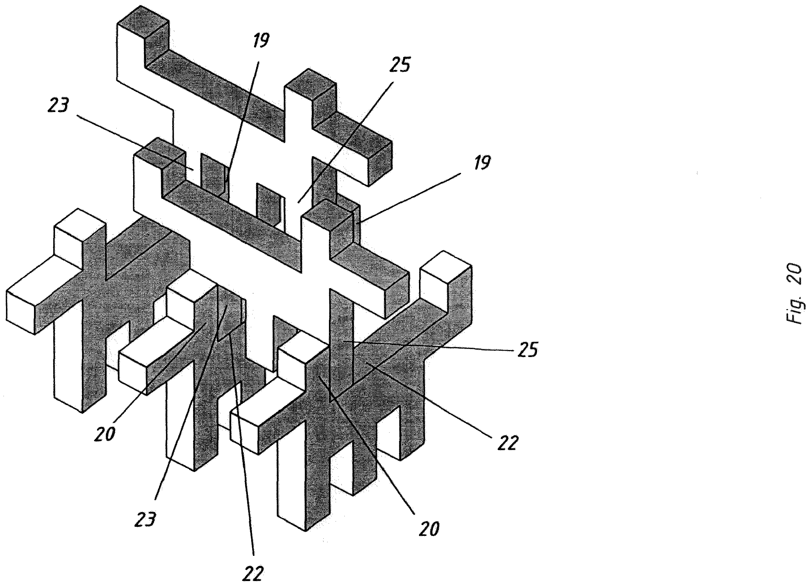

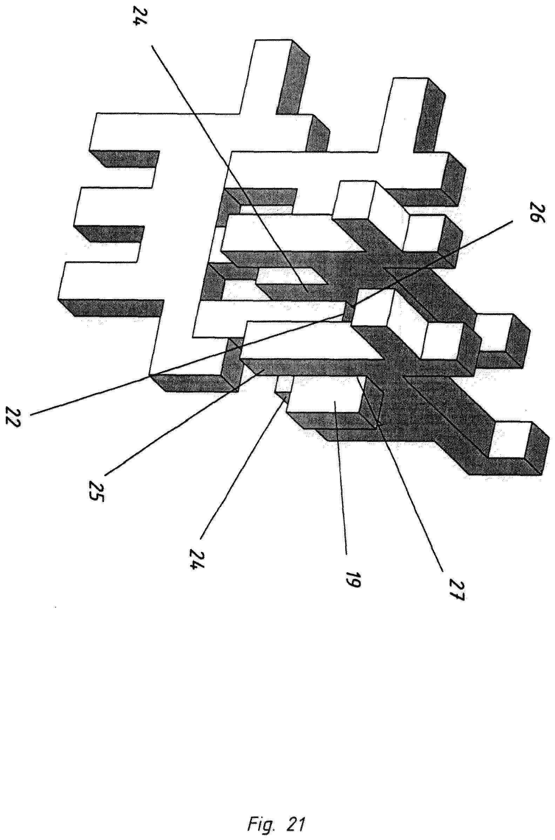

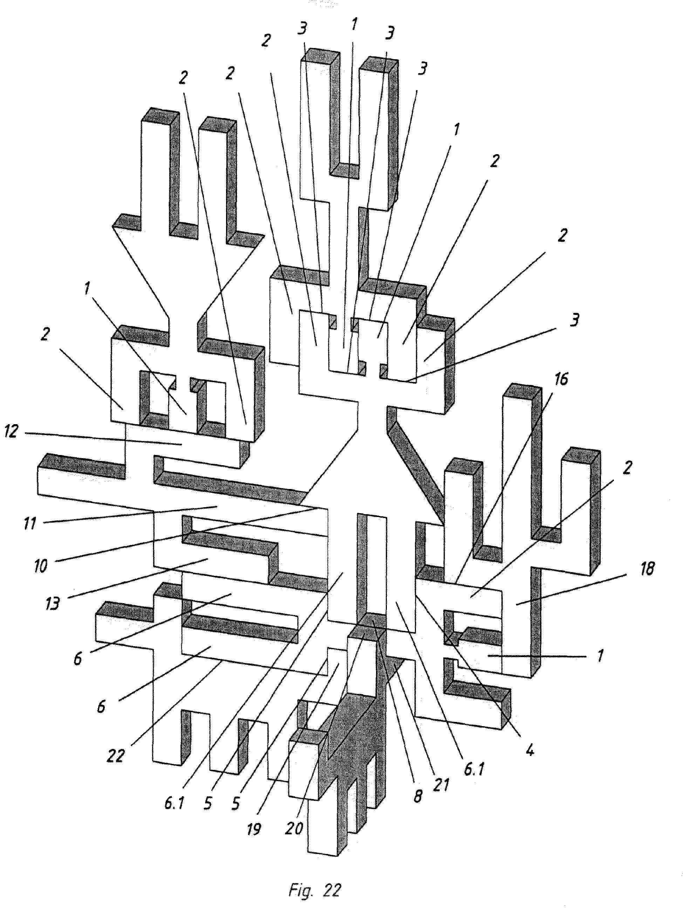

Below is the list of attached drawings.
Fig. 1. General front view of the module "Boy", where:
   - 1: - head
   - 1.1: -neck
   - 2: - arm
   - 3: - shoulder
   - 4: - forearm
   - 5: - hip
   - 6: - leg
   - 7: - the distance between legs
   - 8: - corpus
Fig. 2. General view of the module "Boy" in isometry, where:
   - 1: - head
   - 1.1: - neck
   - 2: - arm
   - 3: - shoulder
   - 4: - forearm
   - 5: - hip
   - 6: - legs
   - 7: - the distance between legs
   - 8: - corpus
   - a: - the module thickness
   - b: - height of the head
   - c: - height of the neck
   - d: - the distance between the outer extreme points of arm, the length of legs to the hip inclusively
   - e: - the height of the arm, the width of the module base, the corpus length
   - f: - the width of forearm
Fig. 3. General view of modules "Boy" assembly in isometry, where:
   - 1: - head
   - 2: - arm
   - 3: - shoulder
   - 4: - forearm
   - 5: - hip
   - 6: - leg
   - 7: - the distance between legs
   - 8: - corpus
Fig. 4. General view of modules "Boy" assembly in isometry, where:
   - 1: - head
   - 2: - arm
   - 6: - leg
   - 8: - corpus
Fig. 5. General view of modules "Boy" assembly in isometry, where:
   - 4: - forearm
   - 5: - hip
   - 6: - leg
   - 7: - the distance between legs
   - 8: - corpus
Fig. 6. General view of modules "Boy" assembly in isometry, where:
   - 1: - head
   - 4: - forearm
   - 6: - leg
   - 8: - corpus
Fig. 7. General front view of the module "Girl", where:
   - 1: - head
   - 1.1: - neck
   - 2: - arm
   - 3: - shoulder
   - 4: - forearm
   - 6.1: - leg
   - 7: - the distance between legs
   - 8.1: - corpus
   - 9: - skirt
   - 10: - bottom part of the skirt
Fig. 8. General view of the module "Girls" in isometry, where:
   - 1: - head
   - 1.1: - neck
   - 2: - arm
   - 3: - shoulder
   - 4: - forearm
   - 6.1: - leg
   - 7: - the distance between legs
   - 8.1: - corpus
   - 9: - skirt
   - 10: - bottom part of the skirt
   - a: - the module thickness, the distance from the lower part of the skirt edge to the leg, the corpus length
   - b: - height of the head
   - c: - height of the neck
   - d: - the distance between the outer extreme points of arm
   - e: - the height of the arm, the width of the module base, the skirt length
   - f: - the width of forearm
Fig. 9. General view of the module "Girls" in isometry, where:
   - 1: - head
   - 1.1: - neck
   - 2: - arm
   - 3: - shoulder
   - 4: - forearm
   - 6.1: - leg
   - 8.1: - corpus
   - 9: - skirt
   - 10: - bottom part of the skirt
Fig. 10. General view of the module "Girls" in isometry, where:
   - 1: - head
   - 2: - arm
   - 3: - shoulder
   - 7: - the distance between legs
   - 9: - skirt
Fig. 11. General view of the module "Girls" assembly in isometry, where:
   - 1: - head
   - 2: - arm
   - 3: - shoulder
   - 6.1: - leg
   - 7: - the distance between legs
   - 8.1: - corpus
   - 9: - skirt
   - 10: - bottom part of the skirt
Fig. 12. General front view of the module "Cactus", where:
   - 11: - the upper part of the trunk
   - 12: - the lower lateral branch
   - 13: - the upper lateral branch
   - 14: - the inner base of the lower lateral branch
   - 15: - the inner base of the upper lateral branch
   - 16: - the outer base of the lower lateral branch
   - 17: - the outer base of the upper lateral branch
   - 18: - the lower part of the trunk
Fig. 13. General view of the module "Cactus" in isometry, where:
   - 11: - the upper part of the trunk
   - 12: - the lower lateral branch
   - 13: - the upper lateral branch
   - 14: - the inner base of the lower lateral branch
   - 15: - the inner base of the upper lateral branch
   - 16: - the outer base of the lower lateral branch
   - 17: - the outer base of the upper lateral branch
   - 18: - the lower part of the trunk
   - a: - the module thickness
   - d: - the distance from the upper part of the trunk to the inner base of the upper lateral branch
   - h: - the distance from the upper part of the trunk to the inner base of the lower lateral branch
   - f: - the outer base of the lateral branches
   - g: - the external height of the lateral branches, the length of the trunk from the lower base of the upper lateral branch to the base of the trunk
Fig. 14. General view of the module "Cactus" in isometry, where:
   - 11: - the upper part of the trunk
   - 12: - the lower lateral branch
   - 13: - the upper lateral branch
   - 14: - the inner base of the lower lateral branch
   - 15: - the inner base of the upper lateral branch
   - 16: - the outer base of the lower lateral branch
   - 17: - the outer base of the upper lateral branch
   - 18: - the lower part of the trunk
Fig. 15. General view of the module "Cactus" in isometry, where:
   - 11: - the upper part of the trunk
   - 12: - the lower lateral branch
   - 13: - the upper lateral branch
   - 16: - the outer base of the lower lateral branch
   - 17: - the outer base of the upper lateral branch
Fig. 16. General view of the module "Cactus" assembly in isometry, where:
   - 11: - the upper part of the trunk
   - 12: - the lower lateral branch
   - 13: - the upper lateral branch
   - 14: - the inner base of the lower lateral branch
   - 16: - the outer base of the lower lateral branch
   - 17: - the outer base of the upper lateral branch
   - 18: - the lower part of the trunk
Fig. 17. General front view of the module "Dog", where:
   - 19: - tail
   - 20: - head
   - 21: - nose
   - 22: - corpus
   - 23: - back leg
   - 24: - middle leg
   - 25: - front leg
   - 26: - the recess between the back and middle leg
   - 27: - the recess between the front and middle leg
Fig. 18. General view of the module "Dog" in isometry, where:
   - 19: - tail
   - 20: - head
   - 21: - nose
   - 22: - corpus
   - 23: - back leg
   - 24: - middle leg
   - 25: - front leg
   - 26: - the recess between the back and middle leg
   - 27: - the recess between the front and middle leg
   - a: - module width
   - d: - length of the back
   - e: - height of the back leg on the tail side
   - f: - height of the head, length of the nose, height of the tail from the side opposite to the corpus, internal height of the front and back legs, height of the middle leg
   - g: - the distance from the base of the module to the dog's nose
Fig. 19. General view of the module "Dog" assembly in isometry, where:
   - 19: - tail
   - 20: - head
   - 21: - nose
   - 22: - corpus
   - 23: - back leg
   - 24: - middle leg
   - 25: - front leg
   - 26: - the recess between the back and middle leg
   - 27: - the recess between the front and middle leg
Fig. 20. General view of the module "Dog" assembly in isometry, where:
   - 19: - tail
   - 20: - head
   - 22: - corpus
   - 23: - back leg
   - 25: - front leg
Fig. 21. General view of the module "Dog" assembly in isometry, where:
   - 19: - tail
   - 22: - corpus
   - 23: - back leg
   - 24: - middle leg
   - 25: - front leg
   - 27: - the recess between the front and middle leg
Fig. 22. General views of modules "Boy", "Girl", "Cactus" and "Dog" assembly in isometry, where:
   - 1: - head
   - 2: - arm
   - 3: - shoulder
   - 4: - forearm
   - 5: - hip
   - 6: - leg
   - 6.1: -leg of a girl
   - 8: - corpus
   - 10: - the lower part of the skirt
   - 11: - the upper part of the trunk
   - 12: - the lower lateral branch
   - 13: - the upper lateral branch
   - 16: - the outer base of the lower lateral branch
   - 18: - the outer base of the lower lateral branch
   - 19: - tail
   - 20: - the dog's head
   - 21: - nose
   - 22: - the corpus of a dog

The embodiment of the invention is described below with reference to the attached drawings.

### Embodiment of invention 1

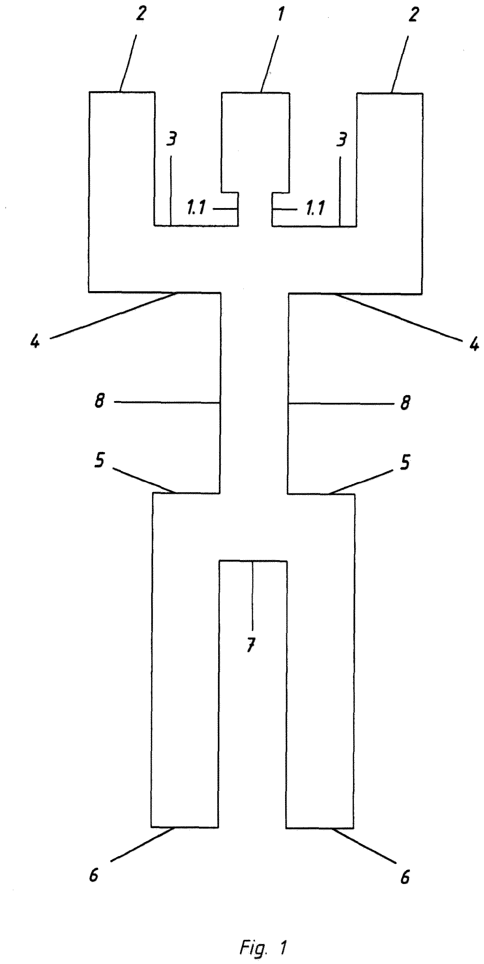

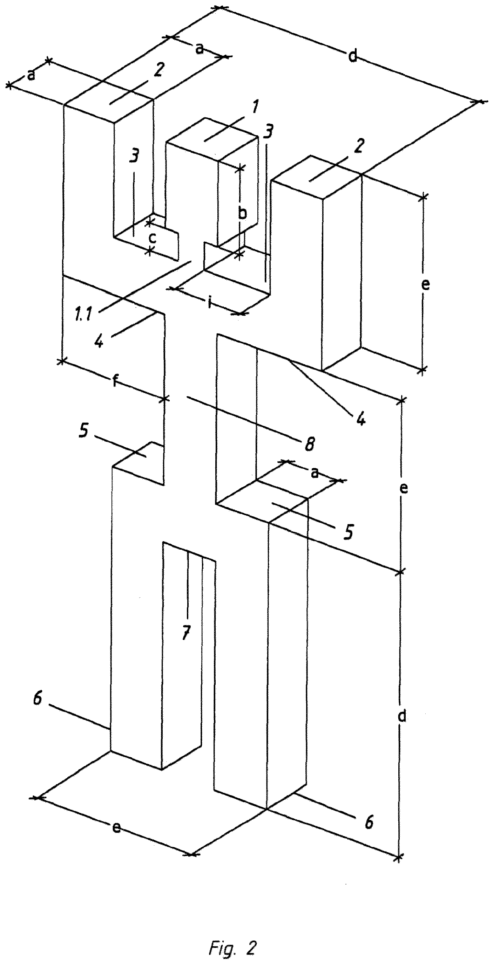

The module represents the figure of a boy (Fig. 1, Fig. 2). It is made volumetrical and consists of a head 1 (Fig. 1, Fig. 2), neck 1.1 (Fig. 1, Fig. 2), arms 2 (Fig. 1, Fig. 2), shoulders 3 (Fig. 1, Fig. 2), corpus 8 (Fig. 1, Fig. 2), hips 5 (Fig. 1, Fig. 2) and legs 6 (Fig. 1, Fig. 2). All elements are rectangular in shape and of the same thickness. At this, the dimensions of the elements have a strictly defined ratio (Fig. 2). If the upper plane of the arms and hips ("a") (Fig. 2) are made in the form of a square, the side of which is equal to 1, then the height of the arms and the distance between the extreme points of the legs ("e") (Fig. 2) is 3a, the width of the shoulders "i" (Fig. 2) is 1.25a, the height of the neck "c" (Fig. 2) is 0.5a, the distance between the extreme points of the arms "d" (Fig. 2) is 5a, the distance from the elbows to the corpus "f" (Fig. 2) is 2a. When the value of "a" changes the other values "e", "i", "c", "d", "f" are changed proportionally, respectively. This ratio of sides dimensions ensures combination of different module models and their tight connection.

The module is made in such a way that it consists of projections and recesses. The projections of another module are inserted into the recesses of one module, and the projections of the same module are placed in the recesses of another module. Protruding elements and recesses having identical overall characteristics should alternate, which creates the possibility of jointing of modules with each other. At this, the various projections of one module can be inserted into various recesses of another module, as well as into the various recesses of one module can be inserted various projections of another module. In this case, the modules in one composition can be located both in horizontal and in vertical plane.

In the module of the boy the function of projections is performed by the head 1 (Fig. 1, Fig. 2, Fig. 6), arms 2 (Fig. 1, Fig. 2, Fig. 3), hips 5 (Fig.1, Fig.2), legs 6 (Fig.1, Fig. 2, Fig. 3, Fig. 5, Fig.6, Fig. 22). The function of the recesses is performed by the recesses between the head 1 and the arms 2 (Fig. 1, Fig. 2, Fig. 22), the recesses on both sides of the corpus 8 (Fig.1, Fig. 2, Fig. 3, Fig. 5, Fig.6, Fig. 22) and the recess between the legs 6 (Fig.1, Fig. 2, Fig. 5, Fig. 6). When composing the composition (Fig. 5, Fig. 3, Fig. 6) legs 6 are placed in the recesses of the corpus 8, hips 5 (Fig. 5, Fig.6) are placed in the recess of legs 7, the head 1 and forearms 4 are placed in the recess of the corpus 8 (Fig.6). The composition can be made just by placing the figures one on top of the other in a vertical and horizontal plane (Fig. 4), as well as with the simultaneous use of projections and recesses of modules (Fig. 4).

### Embodiment of invention 2

The module represents the figure of a girl. It is made volumetrical and consists of a head, neck, arms, shoulders, corpus, skirt and legs. The elements of a head, neck, arms, shoulders, corpus and legs are rectangular and the skirt sides are made at an angle to the corpus. The elements are of the same thickness. At this, the dimensions of the elements have a strictly defined ratio. If the upper plane of the arms is made as square, the side of which is equal to "a" and is 1, then the height of the arms, the distance between the outer and lateral points of the legs, the distance from the waist to the lower side point of the skirt ("e") is 3a, the shoulders width "i" is 1.25a, the distance between the outer extreme points of the arms "d" is 5a, the distance from the elbows to the corpus "f" is 2a. When the value of "a" changes the other values change proportionally, respectively. This ratio of dimensions of sides ensures combination of different modules models and their tight connection.

The module is made in such a way that it consists of projections and recesses. The projections of one module are inserted into the recesses of another module, and the projections of the same module are placed in the recesses of another module. Protruding elements and recesses having identical overall characteristics should alternate, which creates the possibility of jointing of modules with each other. At this, the various projections of one module can be inserted into various recesses of another module, as well as into the various recesses of one module can be inserted various projections of another module. In this case, the modules in one composition can be located both in horizontal and in vertical plane.

In the module of a girl the function of the projections is performed by the head 1 (Fig. 7, Fig. 8), arms 2 (Fig. 7, Fig. 8), skirt 9 (Fig. 7, Fig. 8), legs 6.1 (Fig. 7, Fig.8). The function of the recesses is performed by the recesses between the head 1 (Fig. 7, Fig. 8) and hands 2 (Fig. 7, Fig. 8), recesses on both sides of the corpus 8.1 (Fig. 7, Fig. 8) and the recess 7 (Fig. 7, Fig. 8) between the legs 6 (Fig. 7, Fig. 8) and the lower plane of the skirt 9 (Fig.7, Fig. 8). When making the composition (Fig. 9, Fig. 10, Fig. 11), the skirt 9 (Fig. 7, Fig. 8, Fig. 9, Fig. 10, Fig. 11) is placed in the recesses between head 1 (Fig. 9, Fig. 10) and hands 2 (Fig. 9, Fig. 10), the arms 2 (Fig. 11) are placed in the recesses between the head 1 (Fig. 11) and the arms 2 (Fig. I).

The composition can be made by simply placing the figures one on top of the other in a vertical and horizontal plane (Fig. 11), as well as using the projections and recesses of the modules at the same time (Fig. 11).

### Embodiment of invention 3

The module represents the figure of a cactus. It is volumetrical and consists of a trunk, a right lateral branch and a left lateral branch. One of the branches is located below the other one. Elements are rectangular in shape and of the same thickness. At this, the dimensions of the elements have a strictly defined ratio. If the upper plane of the trunk is made in the form of a square, the side of which is equal to "a" and is 1, then the distance from the upper point of the trunk to the inner base of the lower lateral branch ("h") is 6a. The distance from the upper point of the trunk to the inner base of the upper lateral branch ("d") is 5a. The height of the right and left branches ("g") is 4a, the outer base of the branches "f" is 2a. When the value of "a" changes the other values change proportionally, respectively. Such ratio of dimensions of sides ensures combination of different models of modules and their tight connection.

The module is made in such a way that it consists of projections and recesses. The projections of one module are inserted into the recesses of another module, and the projections of the same module are placed in the recesses of another module. At this, the various projections of one module can be inserted into various recesses of another module, as well as into the various recesses of one module can be inserted various projections of another module. In this case, the modules in one composition can be located both in horizontal and in vertical plane.

In the module of a cactus (Fig. 12, Fig. 13) the upper part of the trunk 11 (Fig. 12, Fig. 13), the lower part of the trunk 18 (Fig. 12, Fig. 13) and branches 12, 13 (Fig. 12, Fig. 13) perform the function of projections . The function of recesses is performed by recesses 14, 15 (Fig. 12, Fig. 13) between the upper part of the trunk 11 (Fig. 12, Fig. 13) and branches 12, 13 (Fig. 12, Fig. 13), between the lower part of the trunk 18 (Fig. 12, Fig. 13) and the outer base 16, 17 (Fig. 12, Fig.1 3) of the lateral branches 12, 13 (Fig. 12, Fig. 13).

When making a composition (Fig. 14) the branch 13 (Fig. 14) of one cactus module is placed into the recess 15 (Fig. 14) between the upper part of the trunk 11 (Fig. 14) and the upper branch 13 (Fig. 14) of another module of a cactus (Fig. 14), and the lower branch 12 (Fig.14) is located into the recess 17 (Fig. 14) of the lower part of the trunk 18 (Fig. 14) and the lower base of the upper branch 13 (Fig. 14) of another module of a cactus.

The composition can be made simply by placing the figures one on top of the other in a vertical and horizontal plane, as well as simultaneous usage of projections and recesses of the modules (Fig. 15, Fig. 16).

### Embodiment of invention 4

The module represents the figure of a dog. It is volumetrical (Fig. 17, Fig. 18) and consists of a head 20, nose 21, corpus 22, tail 19 and paws 23, 24 and 25. Elements are rectangular in shape and of the same thickness. At this, the dimensions of the elements have a strictly defined ratio. If the upper plane of the head is made in the square form, the side of which is equal to "a" and is 1, then the distance from the top of the head to the corpus, the length of the nose, the height of the tail, the height of the front leg, the height of the middle leg and the height of the back leg "f" is 2a, the distance from the tail to the base of the figure "e" is 3a, the length of the corpus "d" is 5a and the distance from the nose to the base of the figure "g" is 4a. When the value of "a" changes the other values change proportionally, respectively. Such ratio of dimensions of sides ensures combination of different models of modules and their tight connection.

The module is made in such a way that it consists of projections and recesses. The projections of one module are inserted into the recesses of another module, and the projections of the same module are placed in the recesses of another module. At this, the various projections of one module can be inserted into various recesses of another module, as well as into the various recesses of one module can be inserted various projections of another module. In this case, the modules in one composition can be located both in horizontal and in vertical plane.

In the module of a dog the function of projections is performed by the nose 21 (Fig. 17, Fig. 18), the head 20 (Fig. 17, Fig. 18), the tail 19 (Fig. 17, Fig. 18), the legs 23, 24, 25 (Fig. 17, Fig. 18). The function of recesses is performed by a part between the head 20 (Fig. 17, Fig. 18) and the tail 19 (Fig. 17, Fig. 18), between the head 20 (Fig. 17, Fig. 18) and the nose 21 (Fig. 17, Fig. 18), between the nose 21 (Fig. 17, Fig. 18) and the front leg 25 (Fig. 17, Fig. 18), the recesses 26, 27 (Fig. 17, Fig. 18) between the legs 23, 24. 25 (Fig. 17, Fig. 18), between the tail 19 (Fig. 17, Fig. 18) and the back leg 23 (Fig. 17, Fig. 18).

When making the composition (Fig. 19, Fig. 20, Fig. 21) the legs 23, 24, 25 (Fig. 19, Fig. 21) are located in the recess between the tail 19 (Fig. 19, Fig.2 1) and the head 20 (Fig. 19, Fig. 21). In the compositions (Fig. 20) of the front leg 25 (Fig. 20) and the back leg 23 (Fig. 20) of one module are located into the recesses between the head 20 (Fig. 20) and the tail 19 (Fig. 20) of the other two modules (Fig. 20). In the composition (Fig. 21) several modules are placed using projections and recesses.

The composition can be made simply by placing the figures one on top of the other in a vertical and horizontal plane (Fig. 19), as well as simultaneous usage of projections and recesses of the modules (Fig. 20, Fig. 21).

### Embodiment of invention 5

The modules represent the figure of a boy, a girl, a cactus and a dog. They are made as volumetrical. The elements of the figures have a rectangular shape and are of the same thickness. At the same time, the dimensions of the elements have a strictly defined ratio divisible by 0.5, 1, 1.25, 1.5, 2, 3, 4, 5, 6. When the value of "a" changes the other values change proportionally, respectively. Such ratio of dimensions of sides ensures combination of different models of modules and their tight connection.

The modules are made in such a way that consist of projections and recesses. The projections of one module are inserted into the recesses of another module, and the projections of the same module are placed in the recesses of another module. At this, the various projections of one module can be inserted into various recesses of another module, as well as into the various recesses of one module can be inserted various projections of another module. In this case, the modules in one composition can be located both in horizontal and in vertical plane.

When making the composition (Fig. 22) the modules of a boy (Fig. 1, Fig. 2, Fig. 3, Fig. 4, Fig. 5, Fig. 6), of a girl (Fig. 7, Fig. 8, Fig. 9, Fig. 10, Fig. 11), of a cactus (Fig. 12, Fig. 13, Fig. 14, Fig. 15, Fig. 16), of a dog (Fig. 17, Fig. 18, Fig. 19, Fig. 20, Fig. 21) are used. The projections of some modules are placed into the recesses of other modules. All modules are proportionally combined with each other, resulting in tight connections. The composition can be made simply by placing the figures one on top of the other in a vertical and horizontal plane, as well as simultaneous usage of projections and recesses of the modules (Fig. 22) with a proportional ratio of the elements of the modules:
a = 1;
b = 1.5a;
c = 0.5a;
d = 5a;
e = 3a;
f = 2a;
g = 4a;
h = 6a;
i = 1.25a.

## Claims

1. A modular trainer consists of cubic modules schematically depicting a figure of a boy, differing that the module has projections and recesses. The projections of one module are inserted into the recesses of another module, and the projections of the same module are located in the recesses of another module, and the modules in one composition can be located both in the horizontal and in the vertical plane. The head, arms and legs perform the function of the projections. The function of the recesses is performed by the recesses between the head and arms, the recesses on both sides of the corpus and the recess between the legs. The elements of the module have a rectangular shape and are of the same thickness. At this, the upper plane of the arms and hips and the lower plane of the legs are made in the form of a square, the side of which is equal to 1. The ratio of the lengths of the sides of the other elements of the module is calculated based on the length of the side of the square. Accordingly, the height of the arms and the distance between the extreme points of the legs, the length of the corpus is 3, the width of the shoulders is 1.25, the distance between the extreme points of the arms, the length of the legs is 5, the distance from the elbows to the corpus is 2.

2. A modular trainer consists of cubic modules schematically depicting a figure of a girl, differing that the module has projections and recesses. The projections of one module are inserted into the recesses of another module, and the projections of the same module are located in the recesses of another module, and the modules in one composition can be located both in the horizontal and in the vertical plane. The head, arms, skirt and legs perform the function of the projections. The function of the recesses is performed by recesses between the head and arms, head and shoulders, recesses on both sides of the corpus and recess between the legs and the lower plane of the skirt. The module elements are rectangular in shape and are of the same thickness. At this, the upper plane of the arms and the lower plane of the legs are made in the form of a square the side of which is equal to 1. The ratio of the lengths of the sides of the other elements of the module is calculated based on the length of the side of the square, respectively, the distance from the elbows to the corpus is 2, the height of the arms, the distance between the outer and lateral points of the legs, the distance from the waist to the lower lateral point of the skirt is 3, the shoulder width is 1.25, the distance between the outer extreme points of the arms is 5 and the length of the legs is 4.

3. A modular trainer consists of cubic modules schematically depicting a figure of a cactus, differing that the module has projections and recesses. The projections of one module are inserted into the recesses of another module, and the projections of the same module are located in the recesses of another module, and the modules in one composition can be located both in the horizontal and in the vertical plane. The upper part of the trunk, the lower part of the trunk and branches perform the function of projections. The function of the recesses is performed by the recesses between the trunk and the branches, between the lower part of the trunk and the lateral branches. The module elements have a rectangular shape and are of the same thickness, while the upper and lower planes of the trunk, the upper plane of the left and right branches are made in the form of a square, the side of which is equal to 1. The ratio of the side lengths of the other module elements is calculated based on the length of the side of the square, respectively, the distance from the upper point of the trunk to the inner base of the lower lateral branch is 6, the distance from the upper point of the trunk to the inner base of the upper lateral branch is 5, the distance from the lower base of the trunk to the lower base of the upper branch is 4, the distance from the lower base of the trunk to the lower base of the lower branch is 3. The height of the right and left branches is 4, the outer base of the branches is 2.

4. A modular trainer consists of cubic modules schematically depicting a figure of a dog, differing that the module has projections and recesses. The projections of one module are inserted into the recesses of another module, and the projections of the same module are located in the recesses of another module, and the modules in one composition can be located both in the horizontal and in the vertical plane. The nose, head, tail and legs perform the function of the projections. The function of the recesses is performed by the recesses between the head and tail, between the head and nose, between the nose and the front leg, between the legs, between the tail and the back leg. The elements of the module have a rectangular shape and are of the same thickness, while the upper plane of the head, tail, side plane of the nose and lower plane of the legs are made in the form of a square, the side of which is equal to 1. The ratio of the side lengths of the other elements of the module is calculated based on the length of the side of the square, respectively, the distance from the top of the head to the corpus, the length of the nose, the height of the tail, the height of the front leg, the height of the middle leg, the height of the back and legs is 2, the distance from the tail to the base of the figure is 3, the length of the corpus is 5, the distance from the nose to the base of the figure is 4.

5. According to claims 1, 2, 3 and 4 a modular trainer consists of cubic modules schematically depicting a figure of a boy, a girl, a cactus and a dog, differing that the module has projections and recesses. The projections of one module are inserted into the recesses of another module, and the projections of the same module are located in the recesses of another module, and the modules in one composition can be located both in the horizontal and in the vertical plane. The elements of the module have a rectangular shape and are of the same thickness; the dimensions of the elements have a strictly defined ratio proportional to 1 and are 0.5, 1, 1.25, 1.5, 2, 3, 4, 5 and 6.
